# EUROPEAN PATENT SPECIFICATION

(11) **EP 2 787 871 B1**
(45) Date of publication and mention of the grant of the patent: **26.09.2018**
(21) Application number: 12854664.5
(22) Date of filing: 07.12.2012
(51) Int. Cl.: A47J 37/12, A47J 47/00

(54) **METHOD AND APPARATUS FOR DEEP FRYER**
VERFAHREN UND VORRICHTUNG FÜR EINE FRITTEUSE
PROCÉDÉ ET APPAREIL POUR FRITEUSE

(30) Priority: 08.12.2011 AU 2011905105
(43) Date of publication of application: 15.10.2014
(73) Proprietor: Breville Pty Limited, Botany, NSW 2019 (AU)
(72) Inventor: BREGA, Tristan, Kyabram, Victoria 3620 (AU); BRADY, Scott, Malabar, New South Wales 2036 (AU); PRESTON, Warren, Botany, New South Wales 2019 (AU); ROSE, Vyvyan, Vaucluse, New South Wales 2030 (AU)
(74) Representative: Zimmermann, Tankred Klaus
(86) International application number: PCT/AU2012/001507
(87) International publication number: WO 2013/082676

(56) References cited:
- US-A- 4 574 185
- US-A- 4 845 341
- US-A- 5 471 911
- US-A- 6 138 552
- US-A1- 2005 241 492
- US-A1- 2005 241 492
- US-A1- 2008 110 346
- US-A1- 2010 212 511

## Description

### FIELD OF THE INVENTION

The present invention relates to cooking appliances and in particular to deep fryers.

The invention has been developed primarily for use as a deep fryer for multi-stage cooking (or frying) and will be described hereinafter with reference to this application. However, it will be appreciated that the invention is not limited to this particular field of use.

### BACKGROUND OF THE INVENTION

It is known in the prior art to use a processor to monitor the temperature of the cooking medium used in the deep fryer and to control the heat input to the fryer, usually to ensure maintenance of a desired cooking temperature.

US 2008/0110346 discloses a frying apparatus (or pasta cooker) in which the cooking medium is heated to a temperature ΔT above a set temperature *Ti* at which the food should be cooked.

This over-heating anticipates the introduction of a food load to the fryer, which causes a significant drop in temperature of the cooking medium, which in turn affects the quality of the cooked food. By heating the cooking medium above the desired cooking temperature, the subsequent drop in temperature is mitigated.

The processor of the frying apparatus disclosed in US 4,845,341 is arranged to monitor the rate of temperature change of a cooking medium. This can be used to ensure that a cooking set point is approached smoothly, with reduced potential for overshoot. Alternatively the apparatus can be arranged to supply heat to a cooking medium in response to detection of a rapid temperature drop, which occurs following introduction of the food to be cooked.

### OBJECT OF THE INVENTION

It is an object of the present invention to provide a useful alternative cooking apparatus that is able to exercise control of the temperature of the cooking medium.

It is an object of the invention in its preferred form to provide an improved deep fryer.

### SUMMARY OF THE INVENTION

According to an aspect of the invention there is provided a deep fryer apparatus, the apparatus including:
an external body;
a reservoir located within the body for holding a volume of cooking medium; the reservoir enabling receipt of a fry-basket;
one or more heating elements for heating the cooking medium;
a processor module arranged to receive a selected cooking temperature and coupled to the one or more heating elements for controlling activation and deactivation of the heating element; the processor module being further adapted to calculate an estimated temperature drop expected upon lowering of the fry-basket into the reservoir and to cause the cooking medium to be heated to a temperature that is the estimated temperature drop above the cooking temperature, thereby taking account of the estimated drop;
the apparatus further includes a load-cell that has a weight sensing element arranged such that the load-cell, upon receiving the fry-basket, generates a weight-signal indicative of the weight of the fry-basket and the processor module is arranged to receive the weight-signal and to calculate the estimated temperature drop based on the received weight-signal

Preferably, the load-cell is movable for lowering the fry-basket into the reservoir and for raising the fry-basket from the reservoir.

Preferably, the fry-basket is releasably coupled to the load-cell. More preferably, the processor module is coupled to the weight sensing element for receiving the weight-signal.

Preferably, the processor module is coupled to the load-cell for automatically lowering and raising the fry-basket. More preferably, the processor module pre-activates the one or more heating element based on the estimated temperature drop prior to automatically lowering the fry-basket.

Preferably, the apparatus further includes: a location sensing module for determining position of the basket within the reservoir; the processor module being coupled to the location sensing module for receiving location-signal indicative of the basket position within the reservoir.

Preferably, upon the location-signal changing state from a raised position, the processor module automatically activates that heating element; the processor continues to monitors temperature of the cooking medium; if the temperature of the cooking medium rises above the control temperature, the processor module deactivates the heating elements. Most preferably, the location sensing module includes a sensor that is engaged due to the basket being at least one of either the raised configuration or the lowered configuration.

Preferably, the apparatus further includes one or more fans for directing air-flow through an air-gap about the reservoir. More preferably, the reservoir is thermally coupled to a heat sink proximal to a floor of the reservoir; one or more fans for directing air-flow across the heat sink. Most preferably, the reservoir is thermally coupled to a heat sink proximal to a floor of the reservoir; one or more fans for directing air-flow across the heat sink to thereby create a cooler zone within the cooking medium.

Preferably, the apparatus further includes a temperature sensor for generating a temperature-signal indicative of cooking medium temperature; the processor module being coupled to the temperature sensor for receiving the temperature-signal; the processor module being adapted to monitor cooking medium temperature for detecting commencement of a cooking operation by identifying a drop of the cooking medium temperature.

According to an aspect of the invention there is provided a method of frying using the apparatus of this invention, the method being implemented following selection by a user of a predetermined input configuration, for example one labelled "TWICE FRIED CHIPS" and including using the steps:
(a) configuring a first set cooking time and a first set cooking temperature for first cooking period;
(b) establishing a start cooking medium temperature for first cooking period, the start cooking medium temperature being a first estimated temperature drop above the first set cooking temperature;
(c) lowering the fry-basket into the cooking medium;
(d) maintaining a cooking medium substantially at the first set cooking temperature for first cooking period;
(e) removing the fry-basket;
(f) configuring a second set cooking time and second set cooking temperature for a second cooking period;
(g) establishing a start cooking medium temperature for the second cooking period, the start cooking medium temperature being a second estimated temperature drop above the second cooking temperature;
(h) lowering the fry-basket into the cooking medium;
(i) maintaining the cooking medium substantially at the second set cooking temperature for second cooking period; and
(j) removing the fry-basket.

### BRIEF DESCRIPTION OF THE DRAWINGS

A preferred embodiment of the invention will now be described, by way of example only, with reference to the accompanying drawings in which:
FIG. 1A is a sectional side view of an embodiment deep-fryer apparatus according to the invention;
FIG. 1B is a sectional side view of an embodiment deep-fryer apparatus according to the invention;
FIG. 1C is a sectional side view of an embodiment deep-fryer apparatus according to the invention;
FIG. 2A is a sectional side view of an embodiment reservoir for a deep-fryer apparatus;
FIG. 2B is a side view of an embodiment reservoir for a deep-fryer apparatus;
FIG. 2C is a side view of an embodiment reservoir for a deep-fryer apparatus;
FIG. 2D is a side view of an embodiment reservoir for a deep-fryer apparatus;
FIG. 2E is a side view of an embodiment reservoir for a deep-fryer apparatus;
FIG. 3 is a sectional pictorial view of a filter apparatus for a deep-fryer apparatus;
FIG. 4A is a graphical representation of an embodiment temperature profile during frying operation;
FIG. 4B is a graphical representation of an embodiment temperature profile during frying operation;
FIG. 4C is a graphical representation of an embodiment temperature profile during frying operation;
FIG. 4D is a graphical representation of an embodiment temperature profile during frying operation;
FIG. 4E is a graphical representation of an embodiment temperature profile during frying operation;
FIG. 4F is a graphical representation of an embodiment temperature profile during frying operation;
FIG. 5A and FIG. 5B is a flow chart representation of an embodiment cooking operation;
FIG. 6A and FIG. 6B is a flow chart representation of an embodiment cooking operation;
FIG. 7A and FIG. 7B is a flow chart representation of an embodiment cooking operation;
FIG. 8 is a flow chart representation of an embodiment cooking operation; and
FIG: 9is a sectional side view of an embodiment deep-fryer apparatus;
FIG: 10A is a sectional side view of an embodiment deep-fryer apparatus;
FIG: 10B is a sectional side view of an embodiment deep-fryer apparatus;
FIG: 11 is a sectional side view of an embodiment deep-fryer apparatus;
FIG: 12 is a sectional side view of an embodiment deep-fryer apparatus;
FIG: 13 is a sectional side view of an embodiment deep-fryer apparatus.

### PREFERRED EMBODIMENT OF THE INVENTION

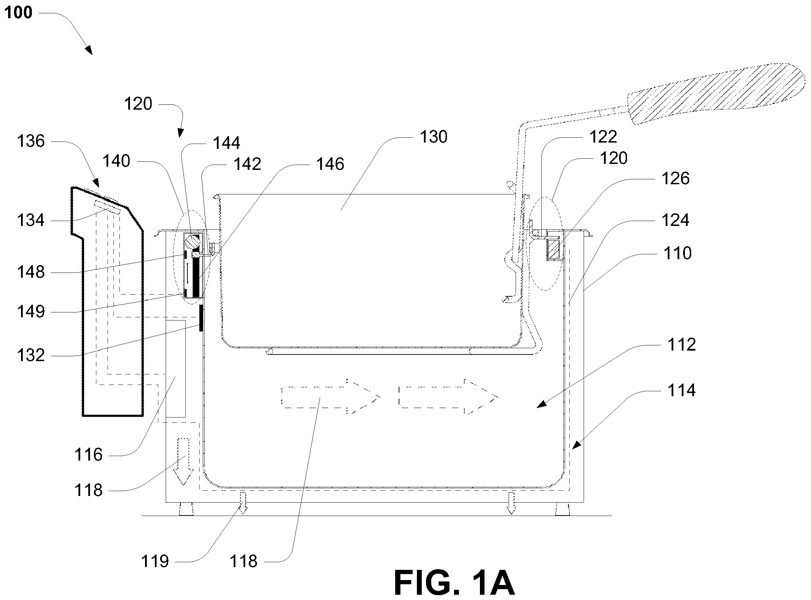

FIG. 1A shows a sectional side view of an embodiment deep-fryer apparatus 100. This apparatus comprises:
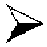 an external body 110;
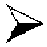 an reservoir 112 (or vessel) for holding a volume of cooking medium, the reservoir being located within the body such that an air-gap 114 is defined between the body and a substantial portion of the reservoir;
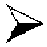 a fan 116 for directing air-flow 118 through the air-gap;
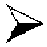 a load-cell 120 for receiving a fry-basket 130;
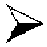 one or more sensing modules 132 for providing a signal indicative of the temperature of cooking medium in the reservoir and/or the location of the fry-basket;
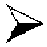 a processor module 134 coupled to a user interface 136 for monitoring operation of the device and receiving input from the user interface.

In this embodiment, a sensing module can be a temperature sensing module for providing a signal indicative of the temperature of cooking medium in the reservoir, a location sensing module (for example in the form of a read switch and/or a mechanical switch) for providing a signal indicative of the fryer basket location or configuration.

In this embodiment, after a cooking operation the processor module can activate the fan to direct air-flow through the air-gap to assist in cooling the cooking medium (for example a cooking oil). It will be appreciated that the fan is controlled by a micro controller to cool the reservoir and the air surrounding the reservoir to increase the cool down rate of the cooking medium. Typically, air flows travels around 118 the reservoir and out 119 of the underside of the unit. The fan can be engaged when a lower cooking medium temperature is required (during cooking) or when the cooking operation is complete (after cooking).

In this embodiment, the processor module can activate the fan to direct air-flow through the air-gap to assist in cooling the cooking medium (for example a cooking oil). During a cooking operation, or after a cooking operation, the fan can direct or draw air-flow across the bottom of the cooking reservoir. The cooking reservoir can include a heat sink to force cool a portion of the reservoir to define a cool zone. The resultant air can be further directed to an upper portion or vent of the vessel for reducing condensation and/or heating of food above the cooking medium and/or heating of attachments sitting above the cooking medium.

By way of example, the device includes a processor module coupled to a user interface for monitoring operation of the device and receiving input from the user interface. The processor module being coupled to a temperature sensing module for receiving a signal indicative of the temperature of cooking medium in the reservoir. The processor module being further coupled to a fan for directing air-flow through the air-gap.

In an embodiment, by way of example only, a load-cell 120 can include a weight sensing hook 122. When a basket is located on the load-cell and engaged with the weight sensing hook 122, the weight of basket and contents is determined using a load-cell, and a signal indicative of the weight can be sent 124 to the processor module. Once the weight has been determined, the set temperature reached, the processor module can calculate a cooking duration of the frying operation. It will be appreciated that cooking duration of the frying operation is affected by the amount of food being fried, and providing a measure of the food weight can assist with calculating the cooking duration and/or cooking medium temperature of the frying operation. For example, if the cooking duration is set, and weight of food measured, a suitable cooking medium temperature can be calculated. Similarly, if the cooking temperature is set, and weight of food measured, a suitable cooking duration can be calculated.

In an embodiment, by way of example only, a load-cell 120 can include a switch element 126 (by way of example a micro-switch) for determining an "auto-start" or "auto-stop". When the basket is placed on a weight sensing hook 122, the switch element can be activated to start or stop a timer maintained by the processor module.

In an embodiment, by way of example only, a load-cell 140 can be movable for introducing the fry-basket into the cooking medium and extracting the fry-basket from the cooking medium. During a multiple stage cooking processes the basket can be placed on a hook 142. The basket can be placed on the hook to begin a frying operation. A motor 144 can be operatively associated with a lifting mechanism 146 for introducing the fry-basket into the cooking medium and extracting the fry-basket from the cooking medium. At the appropriate time the processor module can activate the motor to lower the basket via a lifting mechanism. By way of example only, the lifting mechanism could be a worm drive, belt, chain or a rotating arm. A pair of read switches 148, 149 can be included for identifying an upper and lower range of travel of the load-cell (respectively). When the basket reaches the lower read switch 149, the processor module receives a signal indicating that the basket is fully lowered, and can start a timer. The processor module can continue to raise and lower the basket at the appropriate time using the motor and lifting mechanism. The processor module can be aware of the basket configuration by reading the upper and lower read switches.

It will be appreciated that a switch element can to determine position of basket and automatically energise one or more heating element when basket is lowered, This can compensate for a temperature drop in the cooking medium that is typically experienced when food is introduced. If the switching element changes state of, by energising, one or more heating element that results in a temperature of the cooking medium rising, the processor module can de-energise one ore more heating element.

In an embodiment, hooks 122 or 142 can be a weight sensing hook, which can be operatively associated with a switch element for determining that a basket has engaged the hook.

Alternatively, the weigh signal generated by the weight sensing hook can indicate that a basket has engaged the hook.

The device includes a load-cell for receiving a fry-basket. Wherein, the load-cell includes a weight sensing element that receives the fry-basket containing food and generate a signal indicative of the weight of the fry-basket. The load-cell further generates a signal indicative of the fry-basket being received. The signals are received by a processor module. The load-cell can be automatically raised or lowered under control of the processor module. Alternatively, the fry-basket can preferably be manually raised or lowered into the reservoir.

By way of example, the fry-basket can preferably be manually raised or lowered into the reservoir. The processor module can generate an indicator to the user to raise or lower the fry-basket. The indication can be an audible indicator and/or a visual indicator and/or sensory indicator.

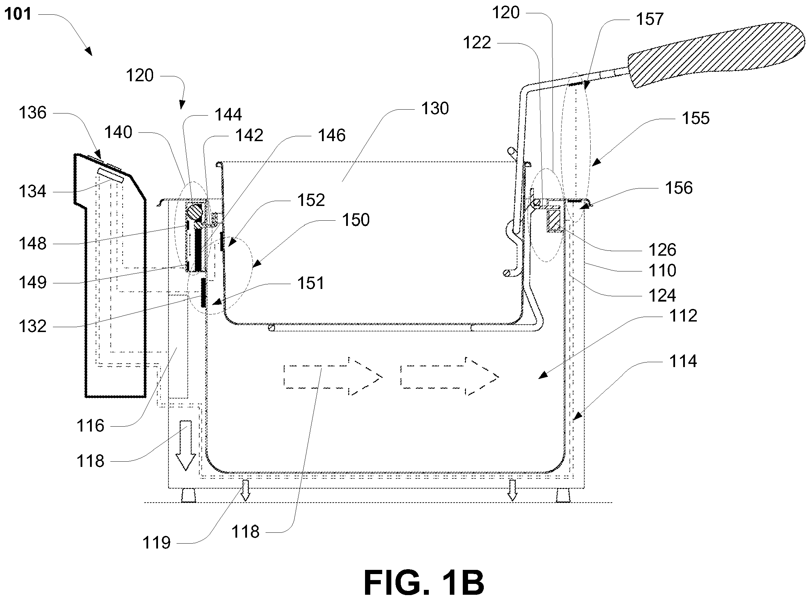

FIG. 1B, shows a sectional side view of an embodiment deep-fryer apparatus 101. A first option to determine if the basket is placed in the oil, is to use a read switch 150 associated with the vessel 151 and the basket 152. A second option to determine if the basket is placed in the oil, is to use a read switch 155 associated with the vessel 156 and/or the basket handle 157. The data signal from the read switch can be used to perform a command or function within the device or processor (for example start the timer or engage elements).

It would be appreciated that a switch (for example, a micro-switch) could be used to determine if the basket is placed in the oil, wherein the switch can be suppressed by a handle of the basket (or other part of the basket) when the basket is fully lowered into the oil (the lowered configuration).

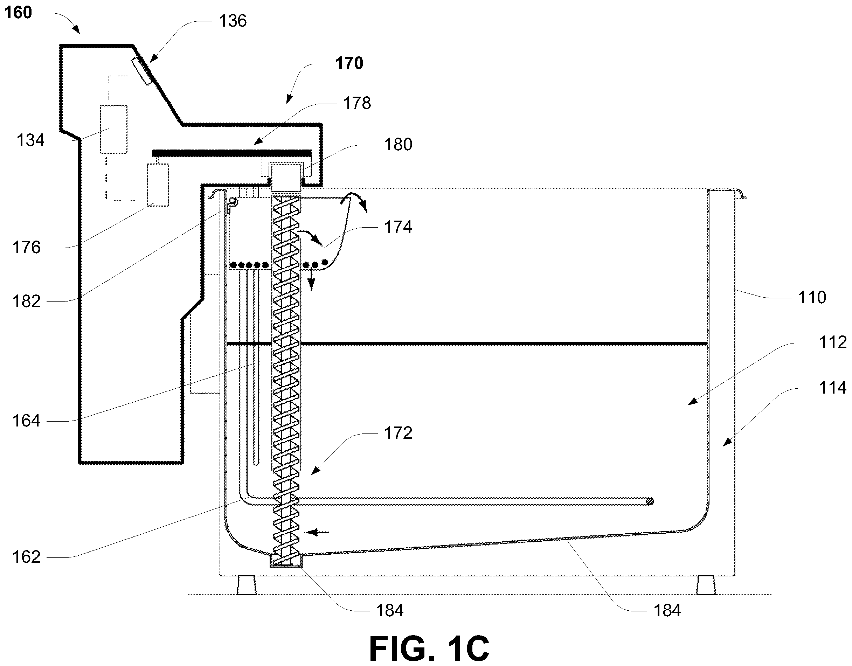

FIG. 1C, shows a sectional side view of an embodiment deep-fryer apparatus 160.

In this example embodiment, the device 160 has a cooking medium filter assembly. By way of example, the device includes:
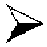 an external body 110;
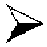 a reservoir 112 for holding a volume of cooking medium, the reservoir being located within the body such that an air-gap 114 is defined between the body and a substantial portion of the reservoir;
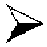 heating element 162;
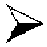 temperature sensor 164 (for example a negative temperature coefficient (NTC) sensor or positive temperature coefficient (PTC) sensor.
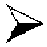 a processor module 134 coupled to a user interface 136 for monitoring operation of the device and receiving input from the user interface;
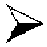 a filter assembly 170 including an augur element (or Archimedes' screw like element) 172 and filter basket174.

The augur 172 is in fluid communication with the filter basket174, and is driven by motor 176 and driving mechanism 178 through a coupling element 180. The augur is powered by a motor and driving mechanism inside the control panel. The auger and control panel are not permanently attached, the augur connects to the control panel via the augur coupling. The driving mechanism can include a direct drive, geared engagement, chain, belt or the like. The coupling element typically includes a cooperating male and female coupling component. The coupling element can provide a sealable releasable that is detachable for washing.

It will be appreciated that the auger, when active, can cause circulation of the cooking medium. Circulation of the cooking medium can improve efficient temperature recovery of the cooking medium through accelerated heat transfer from a reservoir wall.

By way of example only, the filter basket 174 is retained by a hook 182, and is removable. The filter basket is positioned below the edge of the vessel to ensure that if the filter becomes blocked - cooking medium overflow does not fall outside the vessel.

By way of example only, it will be appreciated that the active augur that is used to pull used cooking medium (containing foreign particles) from the bottom of the cooking medium vessel to the top of the vessel where the cooking medium will pass through a filter to remove any foreign particles. After the cooking medium has been filtered it will return to the vessel where it can be used for cooking. Arrows on the figure depicts the flow of cooking medium being filtered.

An angled floor 184 of the vessel is used to encourage foreign particles to move towards a sump 186 proximal to the auger so they can be filtered out of the cooking medium. The augur is counter sunk into the bottom of the vessel to define a sump, and reduce edges where the cooking medium can be trapped.

This cooking medium filter assembly can be used in other embodiment devices disclosed herein.

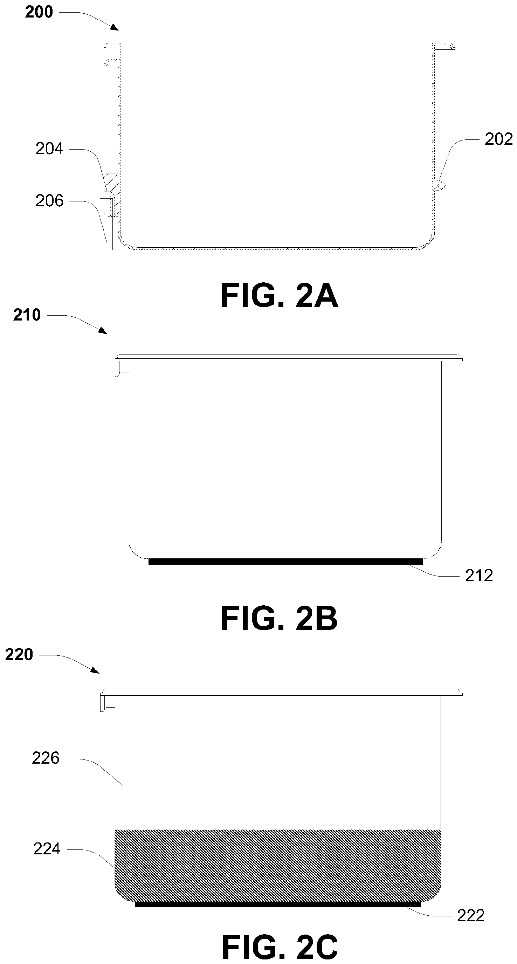

FIG. 2A through FIG. 2E show embodiment reservoirs for a deep-fryer apparatus.

Referring to FIG. 2A, in a first example embodiment, a reservoir 200 can include an embedded element 202 for heating the cooking medium, wherein the reservoir includes a terminal module 204 that engaging a power coupling 206 for supplying power to the embedded element.

Referring to FIG. 2B, in a second example embodiment, a reservoir 210 can be adapted for induction heating, wherein the reservoirs includes a ferrous cooking plate 212.

Referring to FIG. 2C, in a third example embodiment, a reservoir 220 can be adapted for induction heating, wherein the reservoir comprises a ferrous cooking plate 222, a lower ferrous reservoir portion 224 and an upper non-ferrous reservoir portion 226.

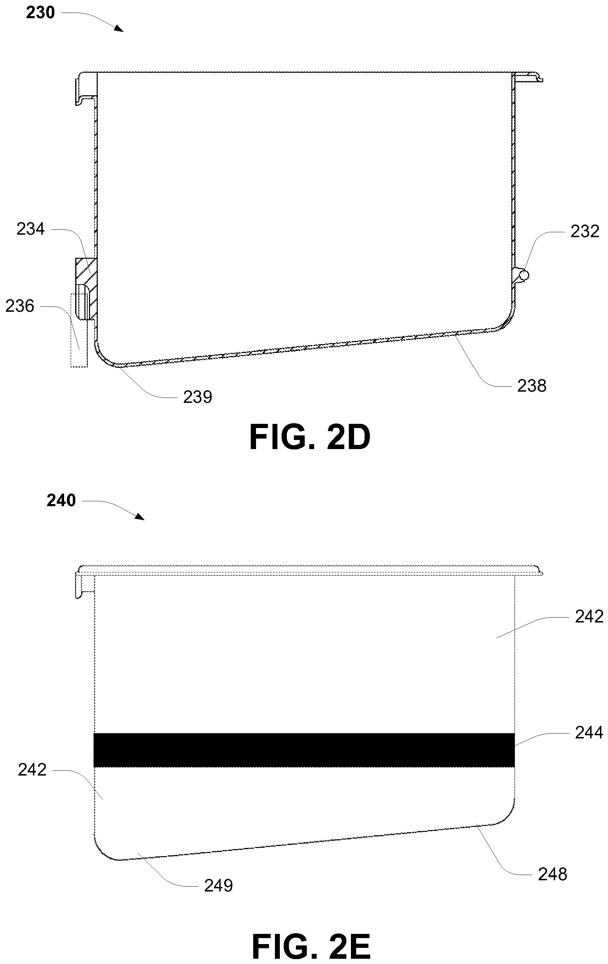

Referring to FIG. 2D, similar to a first example embodiment 200, a fourth embodiment reservoir 230 can include an embedded element 232 for heating the cooking medium, wherein the reservoir includes a terminal module 234 that engaging a power coupling 236 for supplying power to the embedded element. In this embodiment the base 238 of the reservoir 230 is angled to assist particulates in the cooking medium to precipitate to a lower potion 239 of the reservoir.

Referring to FIG. 2E, being similar to the third example embodiment 220, a fifth embodiment reservoir 240 can be adapted for induction heating, wherein the reservoir comprises a substantially non-ferrous reservoir body 242 and a ferrous cooking band 244 for enabling indication cooking. In this embodiment the base 248 of the reservoirs 240 is angled to assist particulates in the cooking medium to precipitate to a lower potion 249 of the reservoir. The ferrous cooking band 244 can be located on the wall of the reservoir (typically spaced above the floor of the reservoir) for reducing the risk of burning debris located on the base of the reservoir.

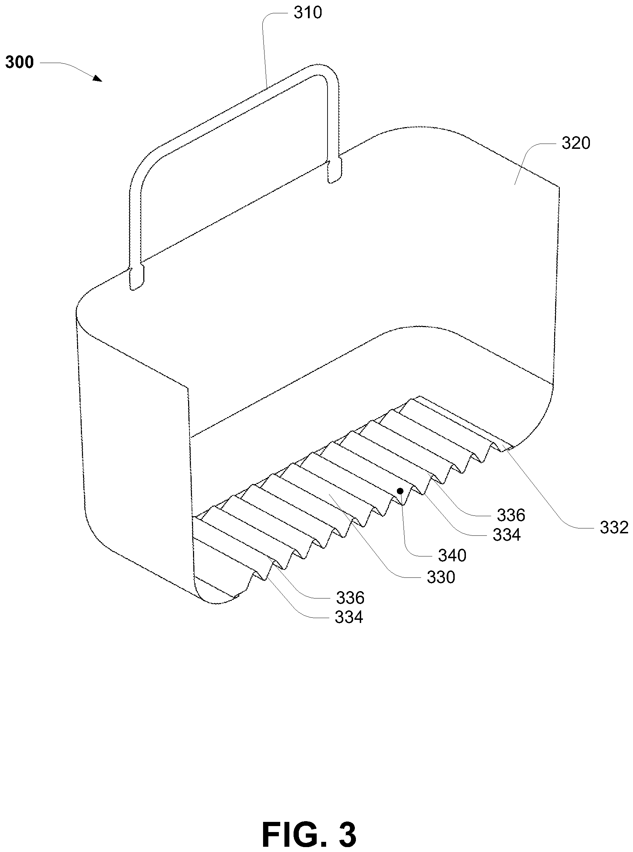

FIG. 3 shows a sectional pictorial view of a filter (or straining) apparatus 300 that can be inserted within the reservoir prior to cooking/frying. The filter apparatus can be withdrawn after cooking to remove (or strain) impurities from the cooking medium. In this embodiment, the filter apparatus includes: handles 310 (which can be removable) for inserting and removing the filter; side walls 320 for constraining the cooking/frying within the confines of the filter assembly; and a perforated filter mesh portion 330 for filtering (or straining) the cooking medium.

As shown in FIG. 3, by way of example only, a perimeter frame 320 of a removable filter apparatus 300 can support a corrugated mesh filter 330. The corrugated mesh filter 330 may be fabricated from stainless steel and attached to the perimeter frame 320 in any of the ways previously discussed, for example, by affixing a flattened perimeter flange 332 of the mesh filter 330 to the inner periphery of the frame 320. The corrugated mesh 330 may be interchanged with a flat mesh filter. The purpose of the corrugated mesh is to use the combined forces of gravity and flow through the mesh to trap waste particles in the valleys 334 that exists between the peaks 336 of the mesh filter. Because the waste particles 340 are collected in concentrated (for example, by gravity) in the area of the valleys 334, such particles 340 do not obstruct the mesh in the area of the peaks 336. Thus, the flow through the mesh filter, during removal, is improved. Further, the corrugated construction creates additional surface area for the cooking medium to pass through when the filter is removed. It will be appreciated that the illustrated embodiment apparatus can provide waste separation filter for a deep fryer. The waste separation filter being preferably removable.

It will be appreciated that the reservoir can be removable. Advantageously, the reservoir can be removed for cleaning in a dishwasher.

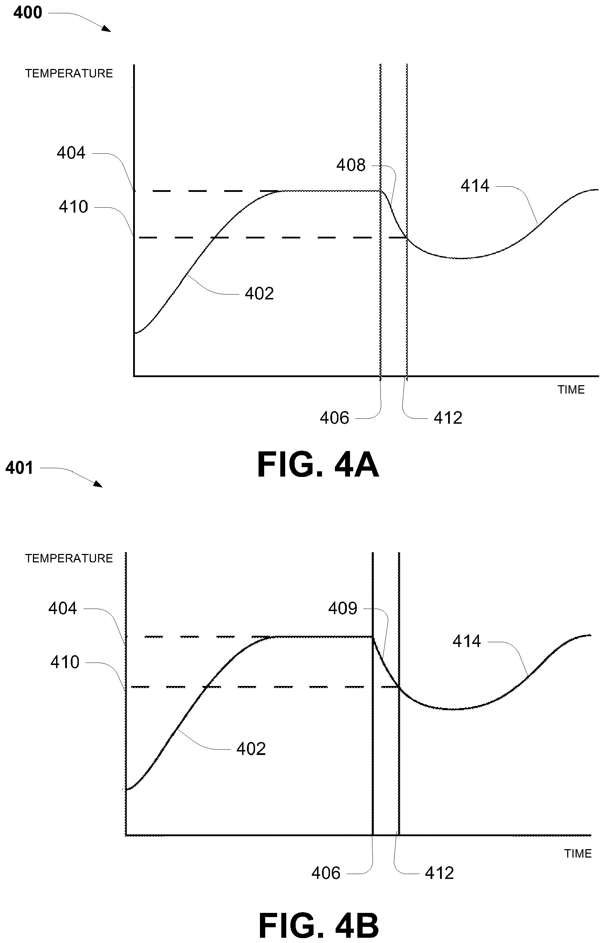

FIG. 4A through FIG. 4F show a graphical representation of an embodiment temperature profile (400, 401, 420, 421, 440, 460) during frying operation.

Referring to FIG. 4A, by way of example only, the processor module commences heating 402 of the cooking medium to the appropriate temperature 404. At a time 406 when the food is introduced into the cooking medium, the medium will encounter a severe temperature drop 408. Upon detection of the temperature drop, for example if the processor module identifies the temperature going below a detection point 410, the cooking operation can be identified as being started 412 and a timer commences. The processor module can then control the heating of the medium 414 to a preferred temperature.

Referring to FIG. 4B, by way of example only, similar to the temperature profile 400, when the food is introduced into the cooking medium, the medium will encounter an alternative temperature drop profile 409.

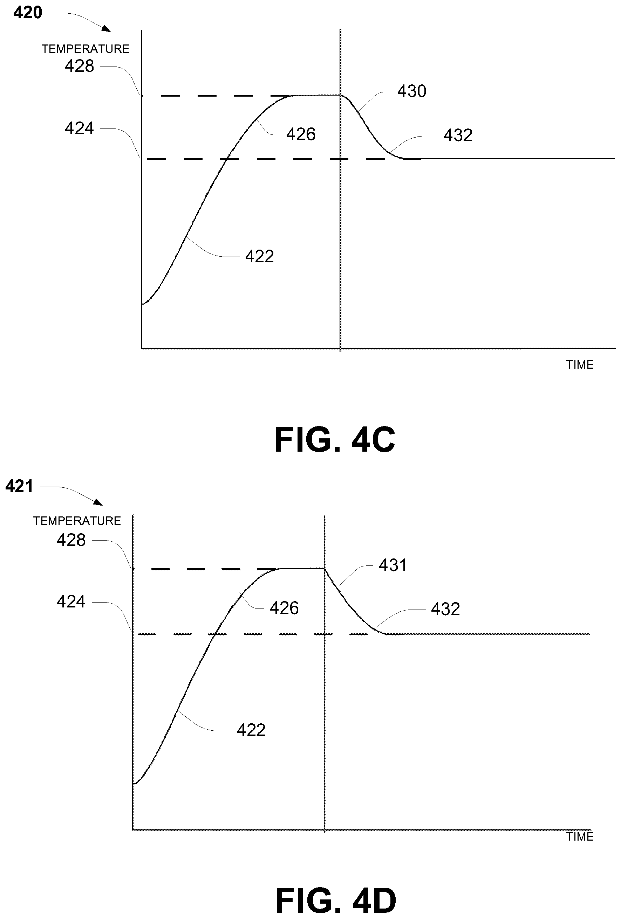

Referring to FIG. 4C, by way of example only, the processor module commences heating 422 of the cooking medium to a selected cooking temperature 424. The processor module can calculate an estimated temperature drop to be expected when food is introduced into the cooking medium. This is based on the weight of food presented. In this example, 30 degrees is the estimated temperature drop. The processor module can control heating 426of the cooking medium to initially be 30 degrees above 428 the selected cooking temperature, thereby taking some account for the expected temperature drop. When the food is introduced the cooking medium the temperature will drop 430 to about desired cooking temperature 432, which can then be monitored and controlled by the processor module.

It will be appreciated that the processor module commences heating of the cooking medium to cooking temperature selected from a data matrix comprising predetermined value relationships between variables including any one of more of the following: cooking temperature, cooking timer, cooking volume, and cooking weight. The processor module can calculate an estimated temperature drop, and/or retrieve a predetermined temperature drop, that may be expected when food is introduced into the cooking medium. This is based on the weight of food.

Referring to FIG. 4D, by way of example only, similar to the temperature profile 420, when the food is introduced into the cooking medium, the medium will encounter an alternative severe temperature drop 431.

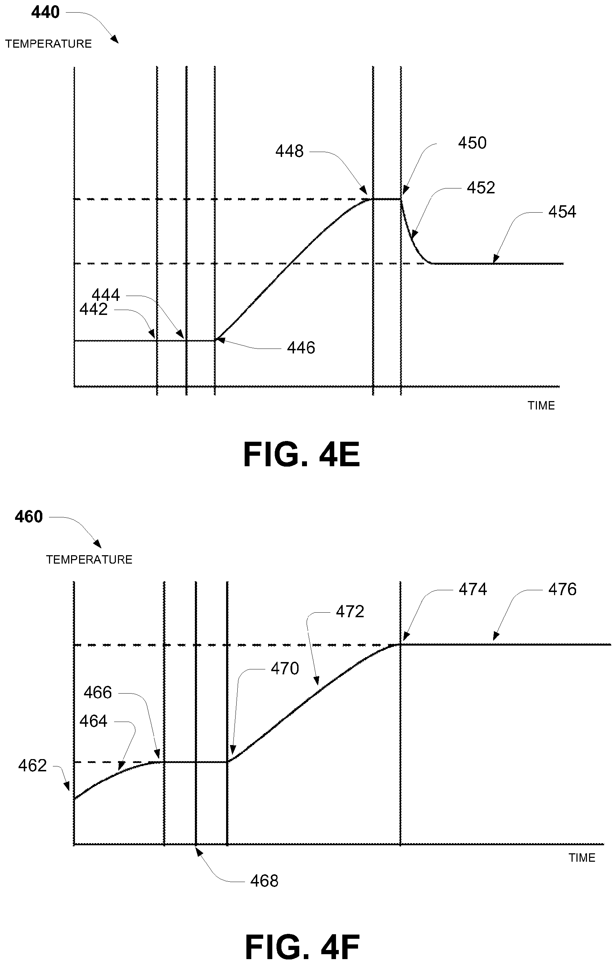

Referring to FIG. 4E, by way of example only, shows a temperature profile 440 of the cooking medium during a cooking process. The basked can first be loaded and weighed 442, with the cooking medium being typically at an ambient temperature. The cooking time and temperature is calculated 444, with the cooking medium being typically at an ambient temperature. The device commences heating of the cooking medium 446. The device heats the cooking medium to a predetermined overshoot temperature 448. Food is introduced 450 to the cooking medium and the temperature drops 452 to the set temperature 454.

Referring to FIG. 4F, by way of example only, shows a temperature profile 460 of the cooking medium during operation of the devices. The device is first turned on 462, with the cooking medium being typically at an ambient temperature. The device initially heats 464 the cooking medium to a low threshold temperature 466. A cooking temperature is set or calculated 468.

The device then heats 470, 472 the cooking medium to the set temperature 474. The device then maintains 476 the cooking medium at the set temperature. It will be appreciated that by initially heating, and maintaining, the cooking medium at a low threshold temperature - the heat-up time for reaching a selected or calculated cooking temperature can be reduced.

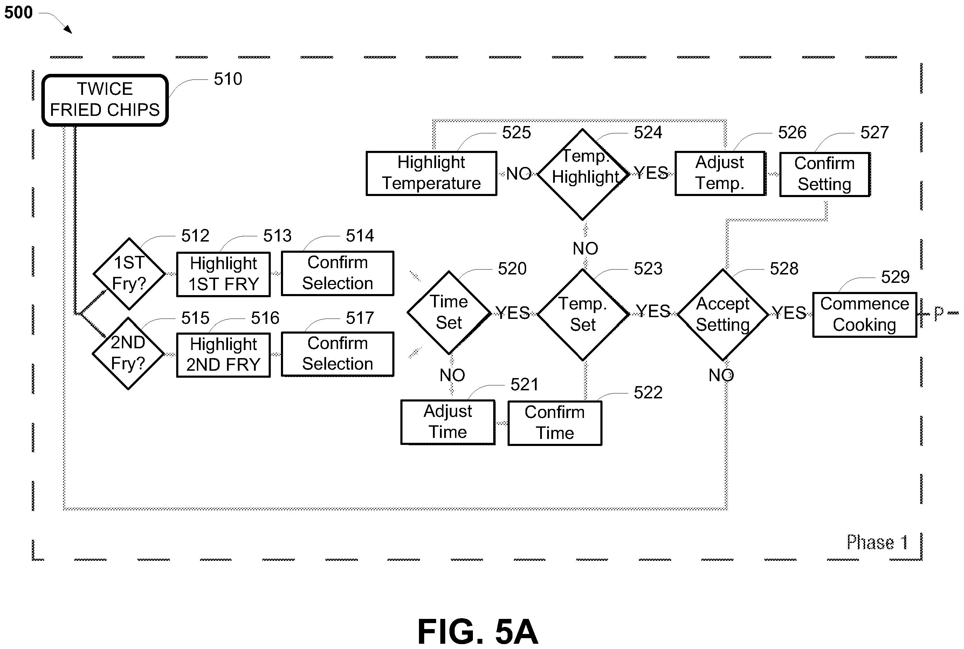

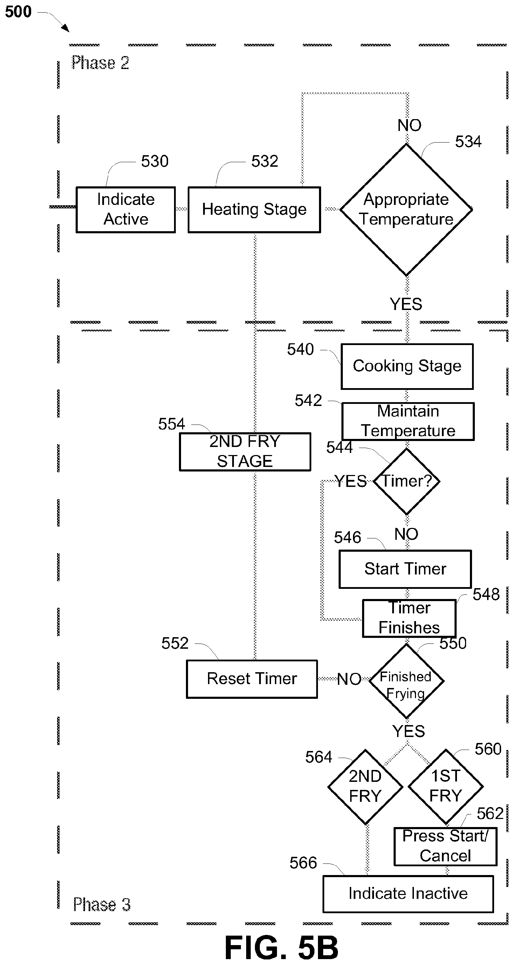

Referring to FIG. 5A and FIG. 5B, the processor module and user interface can control operating of the device. By way of example only, the processor module and user interface can control operating of the device in a multiple phase (being two or more phase) cooking process.

By way of example only, a three phase cooking process is presented as:
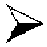 During Phase 1 a start/cancel button can be selected at any time to start the cooking operation (as shown in FIG. 5A).
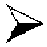 During Phase 2 of the 1ST FRY / 2ND FRY option, the set temperature can be configured (as shown in FIG. 5B). The start/cancel button can be selected to cancel the operation.
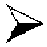 During Phase 3 of the 1ST FRY / 2ND FRY option, the set temperature and the timer can be configured (as shown in FIG. 5B). The start/cancel button can be pushed to cancel the operation.

In an embodiment, configuration of the 1ST FRY / 2ND FRY can be performed during Phase 2 and/or Phase 3.

FIG. 5A shows Phase 1 of this embodiment cooking process 500 for producing twice fried chips. The method of Phase 1 includes the steps of:

| | |
|---|---|
| STEP 510: | User selects "TWICE FRIED CHIPS". |
| STEP 512: | If "1ST FRY"- Highlight "1ST FRY" (STEP 513); Configure the Scroll / Select dial to confirm selection and highlight time (STEP 514); proceed to STEP 520; |
| STEP 515: | If "2ND FRY"- Highlight "2ND FRY" (STEP 516); Configure the Scroll / Select dial to confirm selection and highlight time (STEP 517); proceed to STEP 520; |
| STEP 520: | Confirm Time Setting Acceptable? If Time Setting is not acceptable proceed to STEP 521; If Time Setting is acceptable proceed to STEP 523; |
| STEP 521: | Adjust the time setting, for example turning a scroll/select dial on the user interface; Proceeding to STEP 522; |
| STEP 522: | Confirm setting, for example by pressing or selecting the scroll / select dial; Proceeding to STEP 523; |
| STEP 523: | Temperature Setting Acceptable? If Temperature Setting is not acceptable proceed to STEP 524; If Temperature Setting is acceptable proceed to STEP 528; |
| STEP 524: | Temperature setting highlighted? If Temperature Setting is not highlighted proceed to STEP 525; If Temperature Setting is highlighted proceed to STEP 526; |
| STEP 525: | Highlight the temperature setting, for example by pressing the scroll / select dial; proceed to STEP 526; |
| STEP 526: | Adjust the temperature setting, for example by turning scroll / select dial; proceed to STEP 527; |
| STEP 527: | Confirm the temperature setting, for example by pressing the scroll/select dial; proceed to STEP 528; |
| STEP 528: | All settings acceptable? If Settings are not acceptable proceed to STEP 510; If Settings are acceptable proceed to STEP 529; |
| STEP 529: | Commence Frying, for example by pressing Start / Cancel; Proceeding to STEP 530 as shown in FIG. 5B. |

FIG. 5B shows Phase 2 and Phase 3 of this embodiment cooking process 500 for producing twice fried chips.

The method of Phase 2 includes the steps of:

| | |
|---|---|
| STEP 530: | Indicate the fryer is Active, for example by turning an LCD of the user interface to orange; Proceeding to STEP 532; |
| STEP 532: | Processor module commences/maintains a heating stage to heat cooking medium to the appropriate temperature; Proceeding to STEP 534; |
| STEP 534: | Is the cooking medium temperature equal or above the appropriate temperature? If the cooking medium temperature is not equal (or above) the appropriate temperature, then proceed to STEP 532; If the cooking medium temperature is equal (or above) the appropriate temperature, then proceed to Phase 3 STEP 540. |

The method of Phase 3 includes the steps of:

| | |
|---|---|
| STEP 540: | Device enters the cooking stage; Proceed to STEP 542; |
| STEP 542: | Device is cooking and processor module if maintaining an appropriate temperature; Proceed to STEP 544; |
| STEP 544: | Determine if timer been started? If timer has not been started proceed to STEP 546; If timer has been started proceed to STEP 548; |
| STEP 546: | Start the timer, for example by selecting a timer button; Proceed to STEP 548; |
| STEP 548: | Determine if (or wait for) the timer complete appropriate cooking time period; Proceed to STEP 550; |
| STEP 550: | Determine if finished frying?; If not finished frying proceed to STEP 552; If finished frying 1ST FRY proceed to STEP 560; If finished frying 2ND FRY proceed to STEP 564; |
| STEP 552: | Press the timer button to reset the timer; Proceed to STEP 554; |
| STEP 554: | Device proceed to 2ND FRY stage; Proceed to STAGE 2 STEP 532; |
| STEP 560: | Complete 1ST FRY; Proceed to STEP 562; |
| STEP 562: | Cancel cooking, for example by pressing start/cancel; Proceed to STEP 566; |
| STEP 564: | Complete 2ND FRY; Proceed to STEP 566; |
| STEP 566: | Indicate cooking has completed, for example by turning the LCD of the user interface from orange to white. |

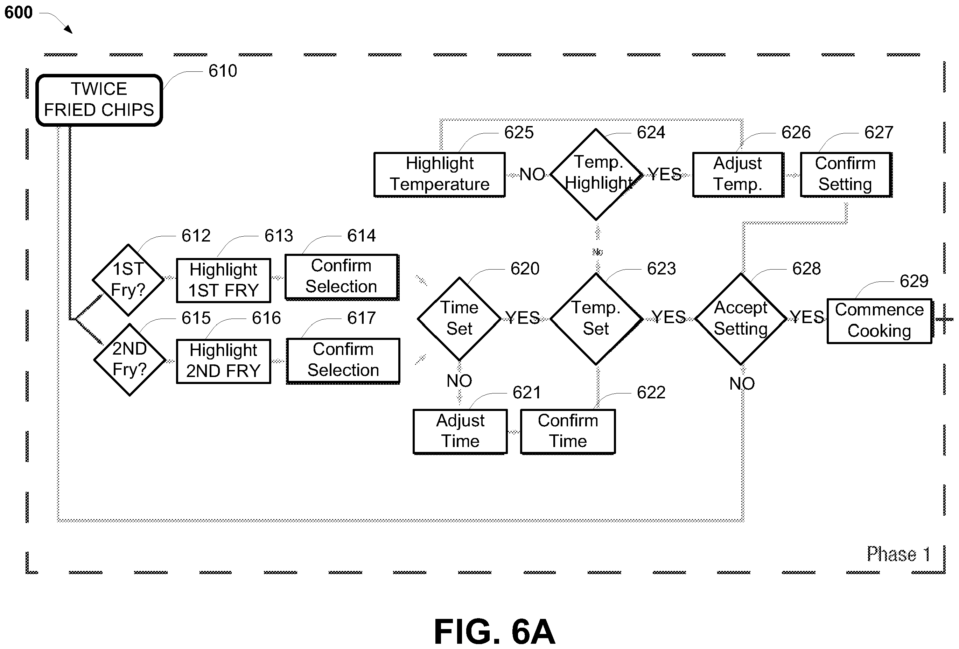

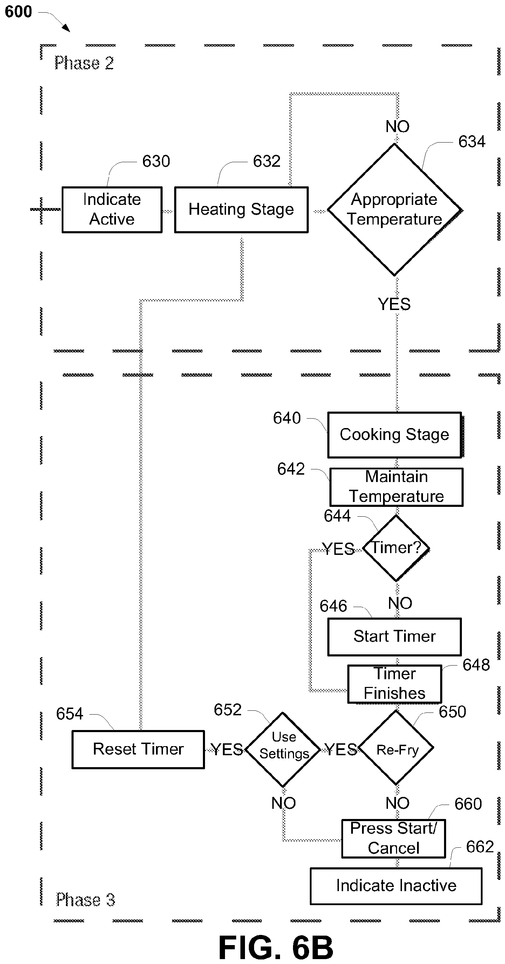

Referring to FIG. 6A and FIG. 6B, the processor module and user interface can control operating of the device. By way of example only, a three phase cooking process is presented as:
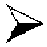 During Phase 1 a start/cancel button can be selected at any time to start the cooking operation (as shown in FIG. 6A).
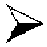 During Phase 2 of the 1ST FRY / 2ND FRY option, the set temperature can be configured (as shown in FIG. 6B). The start/cancel button can be selected to cancel the operation.
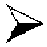 During Phase 3 of the 1ST FRY / 2ND FRY option, the set temperature and the timer can be configured (as shown in FIG. 6B). The start/cancel button can be pushed to cancel the operation.

FIG. 6A shows Phase 1 of this embodiment cooking process 600 for producing twice fried chips. The method of Phase 1 includes the steps of:

| | |
|---|---|
| STEP 610: | User selects "TWICE FRIED CHIPS". |
| STEP 612: | If "1ST FRY"- Highlight "1ST FRY" (STEP 613); Configure the Scroll / Select dial to confirm selection and highlight time (STEP 614); proceed to STEP 620; |
| STEP 615: | If "2ND FRY"- Highlight "2ND FRY" (STEP 616); Configure the Scroll / Select dial to confirm selection and highlight time (STEP 617); proceed to STEP 620; |
| STEP 620: | Confirm Time Setting Acceptable? If Time Setting is not acceptable proceed to STEP 621; If Time Setting is acceptable proceed to STEP 623; |
| STEP 621: | Adjust the time setting, for example turning a scroll/select dial on the user interface; Proceeding to STEP 622; |
| STEP 622: | Confirm setting, for example by pressing or selecting the scroll / select dial; Proceeding to STEP 623; |
| STEP 623: | Temperature Setting Acceptable? If Temperature Setting is not acceptable proceed to STEP 624; If Temperature Setting is acceptable proceed to STEP 628; |
| STEP 624: | Temperature setting highlighted? If Temperature Setting is not highlighted proceed to STEP 625; If Temperature Setting is highlighted proceed to STEP 626; |
| STEP 625: | Highlight the temperature setting, for example by pressing the scroll / select dial; proceed to STEP 626; |
| STEP 626: | Adjust the temperature setting, for example by turning scroll / select dial; proceed to STEP 627; |
| STEP 627: | Confirm the temperature setting, for example by pressing the scroll/select dial; proceed to STEP 628; |
| STEP 628: | All settings acceptable? If Settings are not acceptable proceed to STEP 610; If Settings are acceptable proceed to STEP 629; |
| STEP 629: | Commence Frying, for example by pressing Start / Cancel; Proceeding to STEP 630 as shown in FIG. 6B. |

FIG. 6B shows Phase 2 and Phase 3 of this embodiment cooking process 600 for producing twice fried chips.

The method of Phase 2 includes the steps of:

| | |
|---|---|
| STEP 630: | Indicate the fryer is Active, for example by turning an LCD of the user interface to orange; Proceeding to STEP 632; |
| STEP 632: | Processor module commences/maintains a heating stage to heat cooking medium to the appropriate temperature; Proceeding to STEP 634; |
| STEP 634: | Is the cooking medium temperature equal or above the appropriate temperature? If the cooking medium temperature is not equal (or above) the appropriate temperature, then proceed to STEP 632; If the cooking medium temperature is equal (or above) the appropriate temperature, then proceed to Phase 3 STEP 640. |

The method of Phase 3 includes the steps of:

| | |
|---|---|
| STEP 640: | Device enters the cooking stage; Proceed to STEP 642; |
| STEP 642: | Device is cooking and processor module if maintaining an appropriate temperature; Proceed to STEP 644; |
| STEP 644: | Determine if timer been started? If timer has not been started proceed to STEP 646; If timer has been started proceed to STEP 648; |
| STEP 646: | Start the timer, for example by selecting a timer button; Proceed to STEP 648; |
| STEP 648: | Determine if (or wait for) the timer complete appropriate cooking time period; Proceed to STEP 650; |
| STEP 650: | Determine if re-frying?; If re-frying proceed to STEP 652; If not re-frying proceed to STEP 660; |
| STEP 652: | Determine if using current settings; If using current setting proceed to STEP 654; If not using current setting proceed to STEP 660; |
| STEP 654: | Reset the timer, for example by selecting a timer button; Proceed to STAGE 2 STEP 632; |
| STEP 660: | Cancel cooking, for example by pressing start/cancel; Proceed to STEP 662; |
| STEP 662: | Indicate cooking has completed, for example by turning the LCD of the user interface from orange to white. |

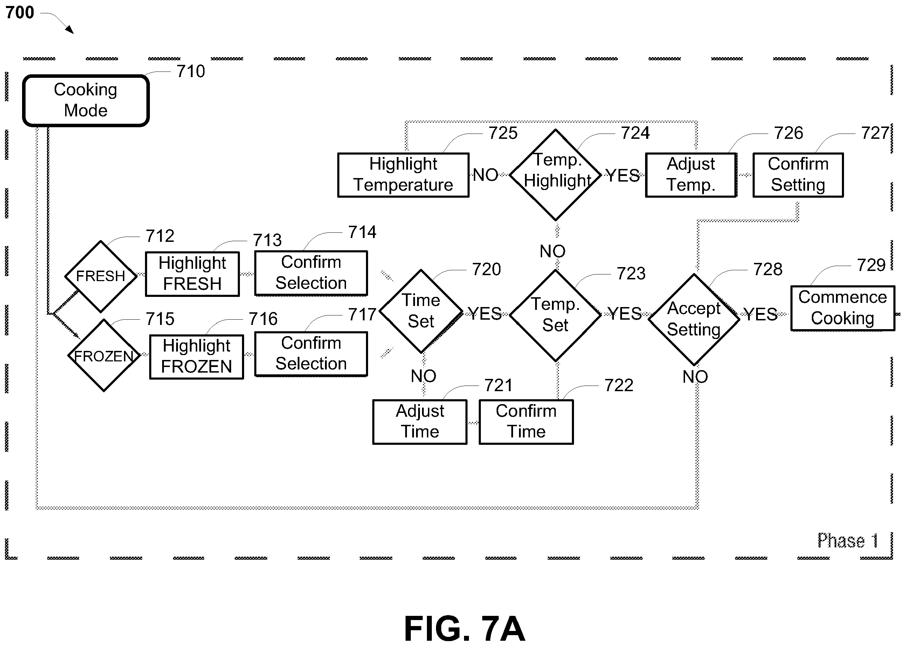

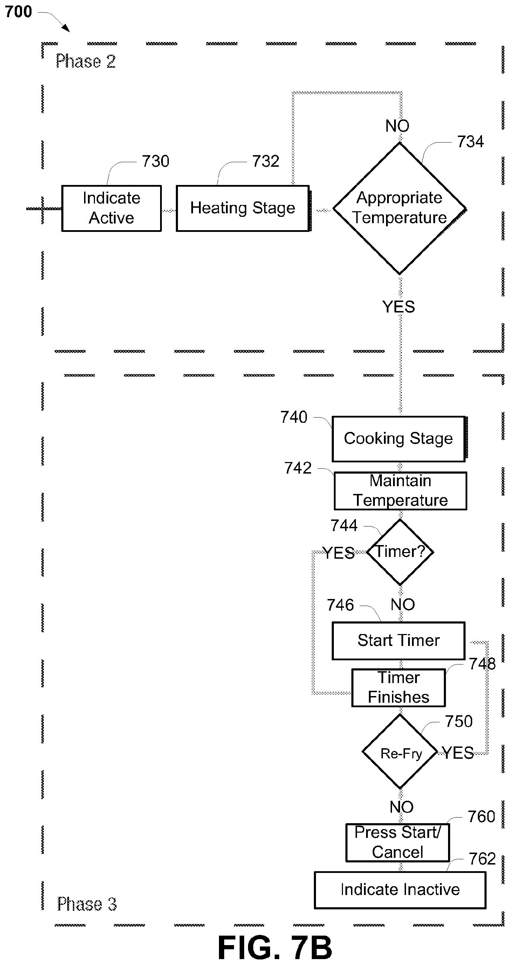

Referring to FIG. 7A and FIG. 7B, the processor module and user interface can control operating of the device. By way of example only, a three phase cooking process is presented as:
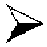 During Phase 1 a start/cancel button can be selected at any time to start the cooking operation (as shown in FIG. 7A).
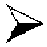 During Phase 2 of the cooking option, the set temperature can be configured (as shown in FIG. 7B). The start/cancel button can be selected to cancel the operation.
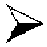 During Phase 3 of the cooking option, the set temperature and the timer can be configured (as shown in FIG. 7B). The start/cancel button can be pushed to cancel the operation.

FIG. 7A shows Phase 1 of this embodiment cooking process 700. The method of Phase 1 includes the steps of:

| | |
|---|---|
| STEP 710: | User selects "Cooking Mode". |
| STEP 712: | If OPTION 1 for example "FRESH"- Highlight this option "FRESH" (STEP 713); Configure the Scroll / Select dial to confirm selection and highlight time (STEP 714); proceed to STEP 720; |
| STEP 715: | If OPTION 2 for example "FROZEN"- Highlight this option "FROZEN" (STEP 716); Configure the Scroll / Select dial to confirm selection and highlight time (STEP 717); proceed to STEP 720; |
| STEP 720: | Confirm Time Setting Acceptable? If Time Setting is not acceptable proceed to STEP 721; If Time Setting is acceptable proceed to STEP 723; |
| STEP 721: | Adjust the time setting, for example turning a scroll/select dial on the user interface; Proceeding to STEP 722; |
| STEP 722: | Confirm setting, for example by pressing or selecting the scroll / select dial; Proceeding to STEP 723; |
| STEP 723: | Temperature Setting Acceptable? If Temperature Setting is not acceptable proceed to STEP 724; If Temperature Setting is acceptable proceed to STEP 728; |
| STEP 724: | Temperature setting highlighted? If Temperature Setting is not highlighted proceed to STEP 725; If Temperature Setting is highlighted proceed to STEP 726; |
| STEP 725: | Highlight the temperature setting, for example by pressing the scroll / select dial; proceed to STEP 726; |
| STEP 726: | Adjust the temperature setting, for example by turning scroll / select dial; proceed to STEP 727; |
| STEP 727: | Confirm the temperature setting, for example by pressing the scroll/select dial; proceed to STEP 728; |
| STEP 728: | All settings acceptable? If Settings are not acceptable proceed to STEP 710; If Settings are acceptable proceed to STEP 729; |
| STEP 729: | Commence Frying, for example by pressing Start / Cancel; Proceeding to STEP 730 as shown in FIG. 7B. |

FIG. 7B shows Phase 2 and Phase 3 of this embodiment cooking process 700.

The method of Phase 2 includes the steps of:

| | |
|---|---|
| STEP 730: | Indicate the fryer is Active, for example by turning an LCD of the user interface to orange; Proceeding to STEP 732; |
| STEP 732: | Processor module commences/maintains a heating stage to heat cooking medium to the appropriate temperature; Proceeding to STEP 734; |
| STEP 734: | Is the cooking medium temperature equal or above the appropriate temperature? If the cooking medium temperature is not equal (or above) the appropriate temperature, then proceed to STEP 732; If the cooking medium temperature is equal (or above) the appropriate temperature, then proceed to Phase 3 STEP 740. |

The method of Phase 3 includes the steps of:

| | |
|---|---|
| STEP 740: | Device enters the cooking stage; Proceed to STEP 742; |
| STEP 742: | Device is cooking and processor module if maintaining an appropriate temperature; Proceed to STEP 744; |
| STEP 744: | Determine if timer been started? If timer has not been started proceed to STEP 746; If timer has been started proceed to STEP 748; |
| STEP 746: | Start the timer, for example by selecting a timer button; Proceed to STEP 748; |
| STEP 748: | Determine if (or wait for) the timer complete appropriate cooking time period; Proceed to STEP 750; |
| STEP 750: | Determine if re-frying?; If re-frying proceed to STEP 746; If not re-frying proceed to STEP 760; |
| STEP 760: | Cancel cooking, for example by pressing start/cancel; Proceed to STEP 762; |
| STEP 762: | Indicate cooking has completed, for example by turning the LCD of the user interface from orange to white. |

It will be appreciated that, the device can weigh the loaded basket, and use this data to calculate the controlled overshoot temperature, cooking temperature and the duration of the cooking process. Alternatively, the device can receive user input indicative of the weight of food to be cooked.

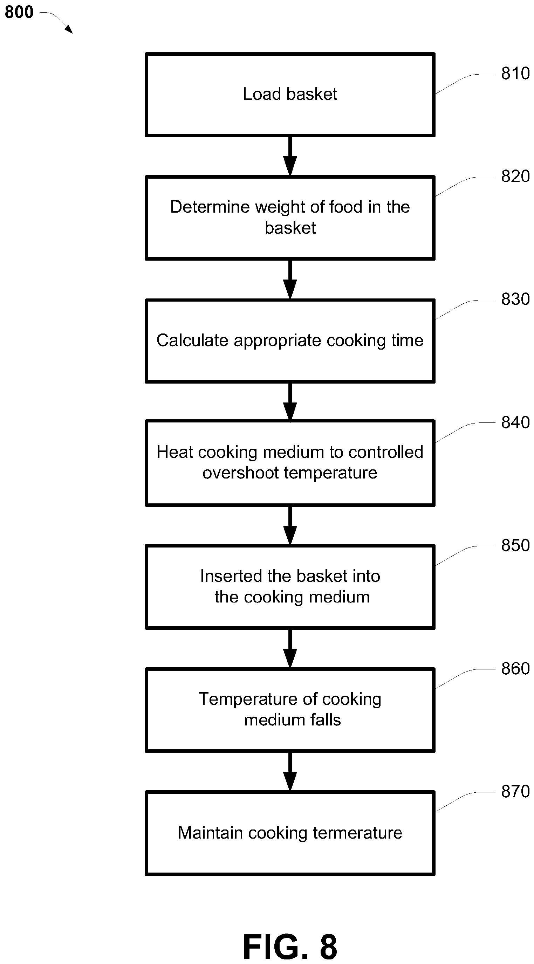

Referring to FIG. 8, the processor module and user interface can control operation of the device. By way of example only, a cooking process is presented as a method 800 having the steps:

| | |
|---|---|
| STEP 810: | Loading the basket with food to be fried or cooked; |
| STEP 820: | Determining (or estimating) the weight of food in the basket; |
| STEP 830: | Calculating an appropriate cooking time uses the weight of the food in the basket and selected cooking temperature; |
| STEP 840: | Heating the cooking medium to a controlled overshoot temperature; |
| STEP 850: | Inserting the basket (and food) into the cooking medium; |
| STEP 860: | Allowing the temperature of the cooking medium to fall to the desired cooking temperature; and |
| STEP 870: | Maintaining the cooking medium at the selected cooking temperature. |

It will be appreciated that, to determine or estimate the weight of food in the basket, the deep-fryer apparatus can receive:
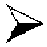 user settings in regard to the weight and/or type of food to be cooked, particularly when the deep-fryer apparatus does not include a weight sensor module; and/or
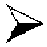 a signal indicative of the weight of the fry-basket from a weight sensing module.

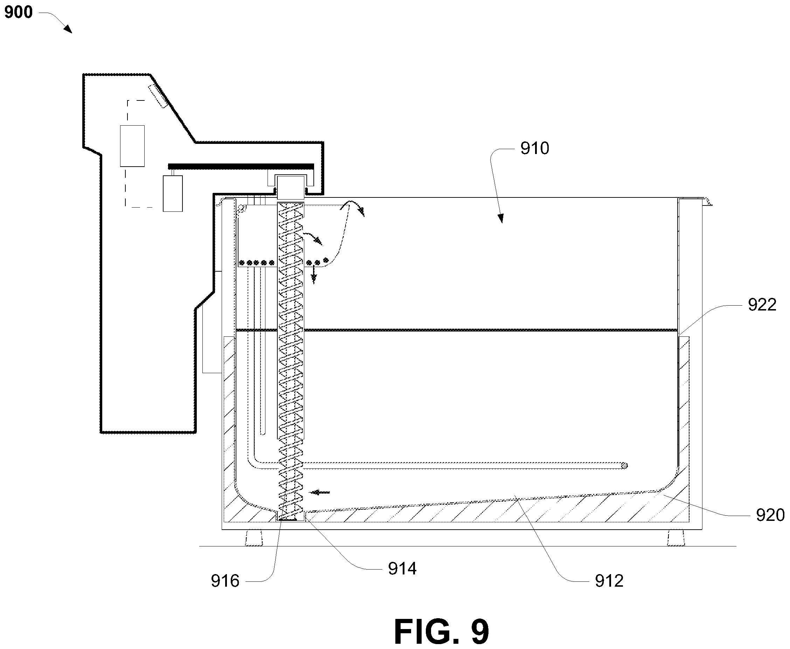

Referring to FIG. 9, an embodiment deep fryer apparatus 900 includes a reservoir 910 having a sloping/angled floor 912 (for example, as also featured 184 of FIG. 1C), is used to encourage foreign particles (not shown) to move towards a sump 914 proximal to the auger 916. As previously discussed the auger may assist in filtering out the foreign particles from the cooking medium.

In this embodiment, the wall thickness of the vessel can be increased (or further material mass provided) 920 about the reservoir 910. This increase in wall thickness is typically about the base and up to predetermined level 922 of the reservoir.

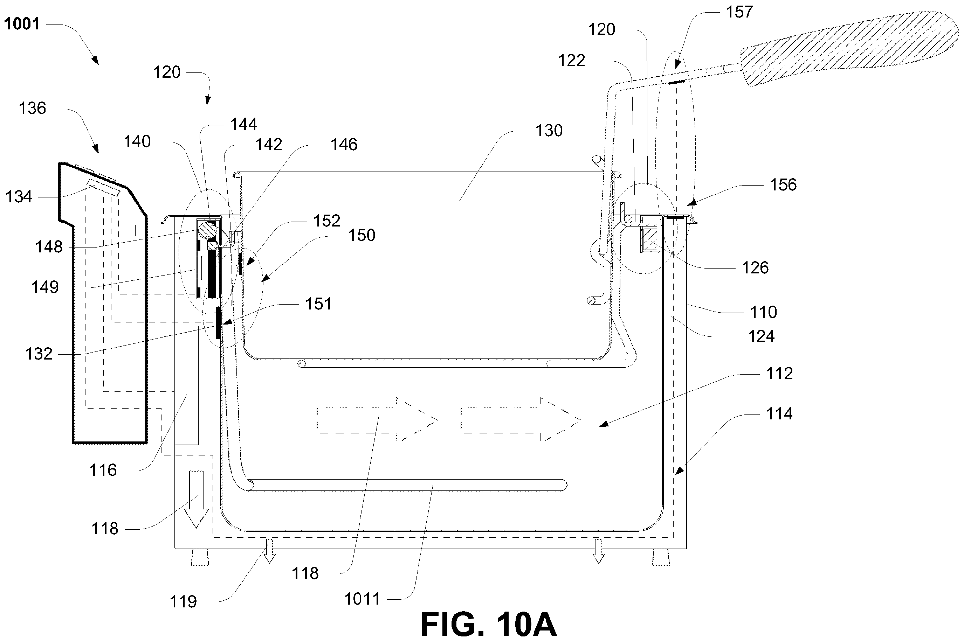

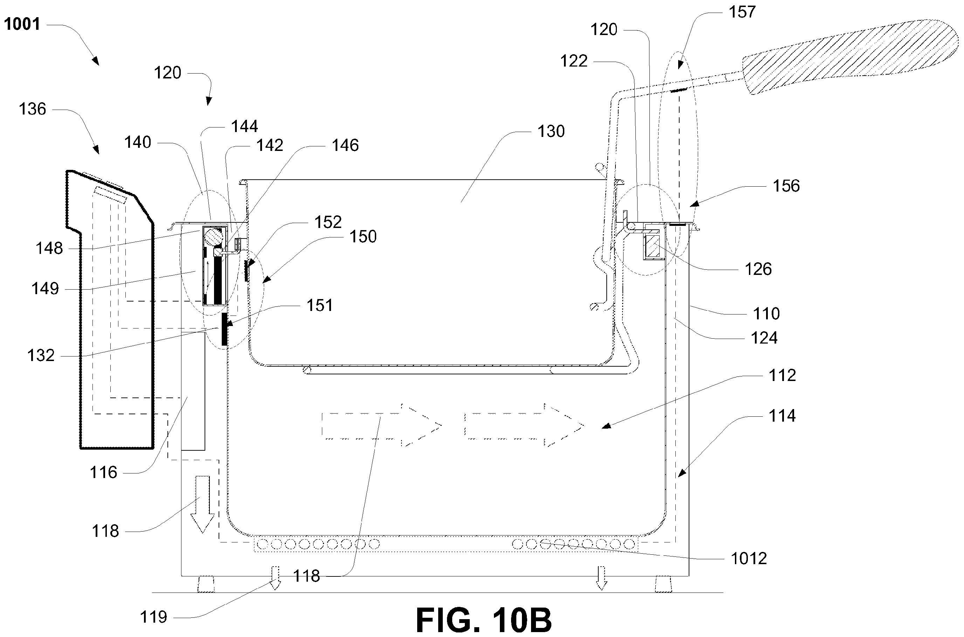

Referring to FIG. 10A and FIG. 10B, embodiment deep fryer apparatus 1001 and 1002 are respectively shown, which are each similar to the apparatus 101 disclosed in FIG. 1B.

In embodiment 1001, a heating element 1011 can be used to heat the cooking medium in the reservoir. The heating element can be located within the cooking medium as shown in FIG. 10A.

In embodiment 1002, a heating element 1012 can be used to heat the cooking medium in the reservoir. The heating element can be located about the cooking medium as shown in FIG. 10B. In this example, the heating element is an induction element operating through the base of the vessel.

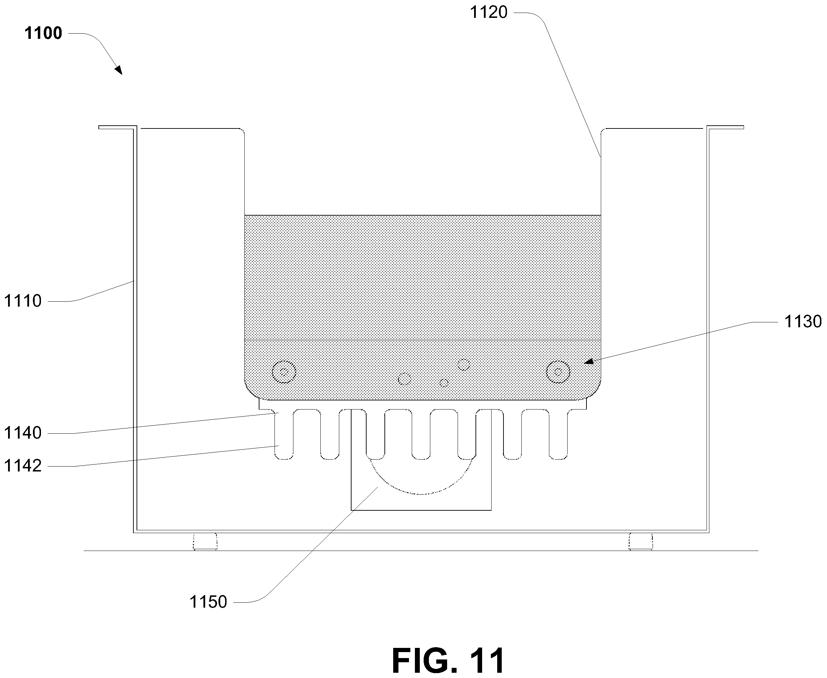

Referring to FIG. 11, an embodiment deep fryer apparatus comprises an external housing 1110, typically constructed of a metal. A reservoir (or vessel) 1120 can be in the form of a stainless steel pressed vessel. The reservoir defines a "cool zone" 1130, wherein which the cooking medium in the "cool zone" is maintained at a lower temperature than the cooking medium above the zone. In this example embodiment, a heat sink 1140 draws heat away from the lower portion of the vessel to thereby define the cool zone 1130. A fan 1150 operates to cause airflow across the fins 1142 of the heat sink 1140, thereby to improve cooling efficiency or effectiveness of the heat sink. Food particles that fall to the base of the reservoir, are located in the cool zone to reduce over cooking or burning which can spoil or degrade the cooking medium.

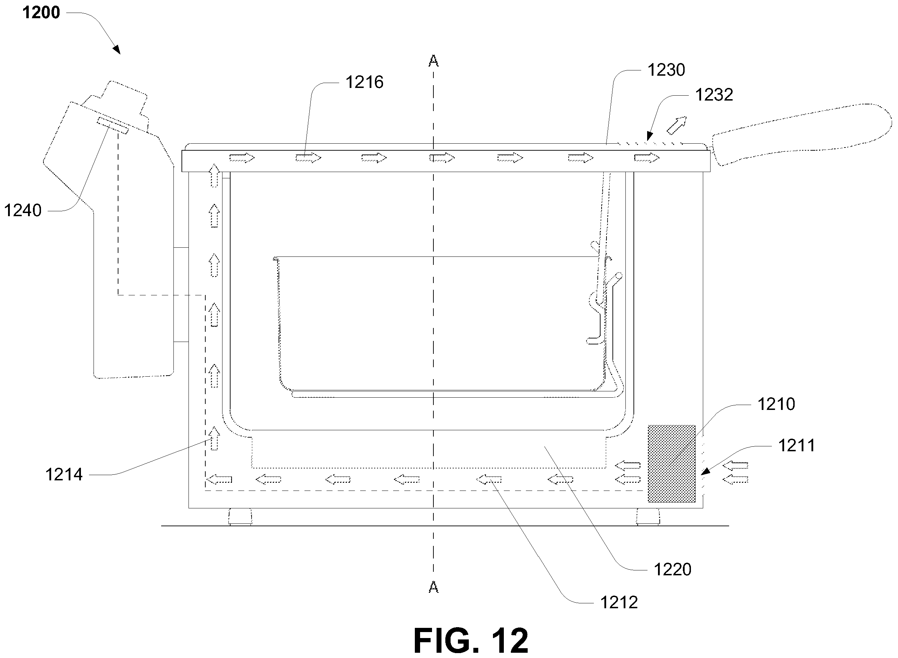

Referring to FIG. 12, an embodiment deep fryer apparatus 1200 has a fan driven cooling mechanism 1210. In this embodiment, a heat sink 1220 is located at the base of the cooking reservoir. The fan 1210 draws air though an inlet vent 1211 and causes air to flow across the heat sink 1220 along path 1212, and around the reservoir along path 1214 to a vent 1232 located in the proximal surface upper surface apparatus 1230 along path 1216.

In this embodiment, the fan is located proximal to the front of the apparatus, for drawing air from outside and directing the air across the heat sink. A control module 1240 is adapted to enable and disable the fan. The vent 1232 is configured to exhaust hot air/fumes out of and away from the apparatus, such that fresher air can enter from the front lower portion of the unit. It will be appreciated that the fan orientation or configuration, and therefore the air flow, can be reversed.

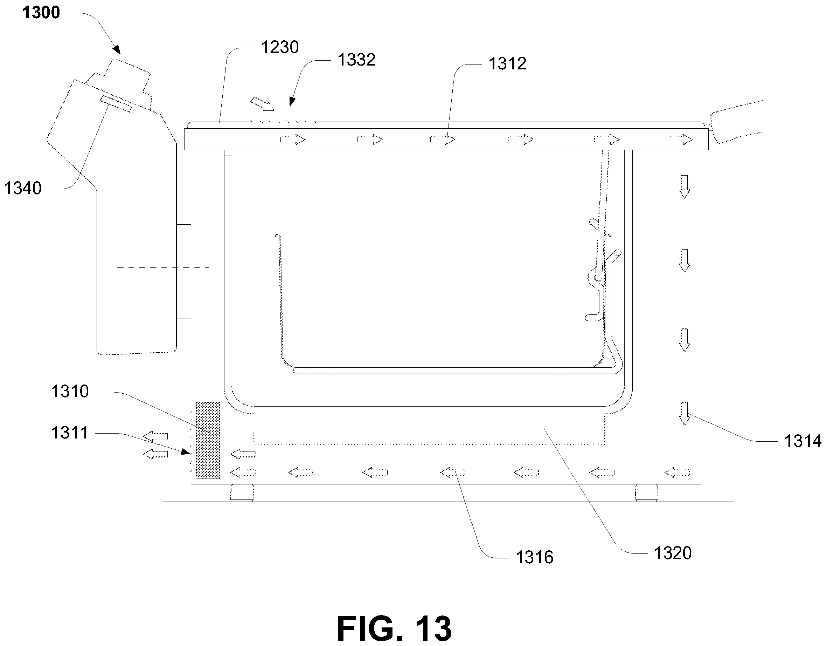

Referring to FIG. 13, an embodiment deep fryer apparatus 1300 has an exhaust fan 1310 is associated with an exhaust vent 1311. In this embodiment, a heat sink 1320 is located at the base of the cooking reservoir. An inlet vent 1332 located proximal to an upper surface 1330 of the apparatus. In this example the inlet vent and exhaust vent are each located toward the rear of the apparatus.

The exhaust fan 1310 which draws air in through the inlet vent 1332 along path 1312, 1314 and 1316. Air flow across the base of the unit is drawn across a heat sink 1330. In this example, the air is drawn around the apparatus and out through the exhaust vent 1311 by the fan 1310. In this embodiment, the fan 1310 is located proximal to the rear of the apparatus,

In this embodiment, a control module 1340 is adapted to enable and disable the fan. The vent 1311 is configured to exhaust hot air/fumes out of and away from the apparatus, such that fresher air can enter from the upper portion of the unit. It will be appreciated that the fan orientation or configuration, and therefore the air flow, can be reversed.

It will be appreciated that the illustrated embodiments can provide an improved deep-fryer.

It would be appreciated that, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In alternative embodiments, the one or more processors operate as a standalone device or may be connected, e.g., networked to other processor(s), in a networked deployment, the one or more processors may operate in the capacity of a server or a client machine in server-client network environment, or as a peer machine in a peer-to-peer or distributed network environment.

Thus, one embodiment of each of the methods described herein is in the form of a computer-readable carrier medium carrying a set of instructions, e.g., a computer program that are for execution on one or more processors.

Unless specifically stated otherwise, as apparent from the following discussions, it is appreciated that throughout the specification discussions utilizing terms such as "processing", "computing", "calculating", "determining" or the like, can refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken is included.

Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

Similarly, it is to be noticed that the term "coupled", when used in the claims, should not be interpreted as being limitative to direct connections only. The terms "coupled" and "connected", along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still cooperate or interact with each other.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Reference throughout this specification to "one embodiment" or "an embodiment" means that a particular feature, structure or characteristic described in connection with the embodiment is included in at least one embodiment. Thus, appearances of the phrases "in one embodiment" or "in an embodiment" in various places throughout this specification are not necessarily all referring to the same embodiment, but may refer to the same embodiment. Furthermore, the particular features, structures or characteristics may be combined in any suitable manner, as would be apparent to one of ordinary skill in the art from this disclosure, in one or more embodiments.

## Claims

1. A deep fryer apparatus, the apparatus including:
an external body (110);
a reservoir (112) located within the body (110) for holding a volume of cooking medium; the reservoir (112) enabling receipt of a fry-basket (130);
one or more heating elements (162, 202, 1011, 1012) for heating the cooking medium;
a processor module (134) arranged to receive a selected cooking temperature and coupled to the one or more heating elements (162, 202, 1011, 1012) for controlling activation and deactivation of the heating element; wherein
the processor module (134) is adapted to calculate an estimated temperature drop expected upon lowering of the fry-basket (130) into the reservoir (112) and to cause the cooking medium to be heated to a temperature that is the estimated temperature drop above the cooking temperature, thereby taking account of the estimated temperature drop; **characterised in that**
the apparatus further includes a load-cell (120) that has a weight sensing element (122) arranged such that the load-cell (120), upon receiving the fry-basket (130), generates a weight-signal indicative of the weight of the fry-basket and the processor module (134) is arranged to receive the weight-signal and to calculate the estimated temperature drop based on the received weight-signal.

2. The apparatus according to claim 1, wherein
the load-cell (120) is movable for lowering the fry-basket (130) into the reservoir (112) and for raising the fry-basket (130) from the reservoir (112).

3. The apparatus according to claim 2, wherein the fry-basket (130) is releasably coupled to
the load-cell (120).

4. The apparatus according to claim 2 or claim 3, wherein the processor module (134) is coupled to the weight sensing element (122) for receiving the weight-signal.

5. The apparatus according to any one of claims 2 to 4, wherein the load-cell (120) generates a load-signal indicative of the fry-basket (130) being received; the processor module (134) being coupled to the load-cell (120) for receiving the load-signal.

6. The apparatus according to any one of claims 2 to 5, wherein the processor module (134) is coupled to the load-cell (120) for automatically lowering and raising the fry-basket (130).

7. The apparatus according to claim 6, wherein the processor module (134) pre-activates the one or more heating element (162, 202, 1011, 1012) based on the estimated temperature drop prior to automatically lowering the fry-basket (130).

8. The apparatus according to any one of the preceding claims, wherein the apparatus further includes: a location sensing module (132, 150, 155) for determining position of the basket (130) within the reservoir (112); the processor module (134) being coupled to the location sensing module (132, 150, 155) for receiving location-signal indicative of the basket position within the reservoir (112).

9. The apparatus according to claim 8, wherein location-signal is indicative of the basket (130) being in a raised configuration or a lowered configuration.

10. The apparatus according to claim 8 or claim 9, wherein the location sensing module includes a sensor (132, 150, 155) that is engaged due to the basket being in at least one of either the raised configuration or the lowered configuration.

11. The apparatus according to claim 9, wherein, the processor module (134) is adapted:
to automatically activate the heating elements (162, 202, 1011, 1012), upon the location-signal changing state from a raised configuration;
to continue to monitor temperature of the cooking medium; and
if the temperature of the cooking medium rises above the control temperature, to deactivate the heating elements (162, 202, 1011, 1012).

12. The apparatus according to any one of the preceding claims, the apparatus further including one or more fans (116) for directing air-flow through an air-gap (114) about the reservoir (112).

13. The apparatus according to any one of the preceding claims, the apparatus further including a temperature sensor (164) for generating a temperature-signal indicative of cooking medium temperature; the processor module (134) being coupled to the temperature sensor (164) for receiving the temperature-signal; the processor module (134) being adapted to monitor cooking medium temperature for detecting commencement of a cooking operation by identifying a drop of the cooking medium temperature.

14. A method of deep frying using a device according to any one of the preceding claims, the method being implemented following selection by a user of a predetermined input configuration, for example one labelled "TWICE FRIED CHIPS" and including using the steps of:
(a) Configuring (830) a first set cooking time and a first set cooking temperature for first cooking period;
(b) establishing (840) a start cooking medium temperature for a first cooking period, the start cooking medium temperature being a first estimated temperature drop above the first set cooking temperature;
(c) lowering (850) the fry-basket into the cooking medium;
(d) maintaining (870) the cooking medium substantially at the first set cooking temperature for the first cooking period;
(e) removing the fry-basket;
(f) configuring (830) a second set cooking time and second set cooking temperature for a second cooking period;
(g) establishing (840) a start cooking medium temperature for the second cooking period, the start cooking medium temperature being a second estimated temperature drop above the second set cooking temperature;
(h) lowering (850) the fry-basket into the cooking medium;
(i) maintaining (870) the cooking medium substantially at the second set cooking temperature for the second cooking period; and
(j) removing the fry-basket.

## Patentansprüche

1. Eine Frittiervorrichtung, wobei die Vorrichtung folgende Merkmale umfasst:
einen äußeren Körper (110);
ein Reservoir (112), das in dem Körper (110) angeordnet ist zum Halten einer Menge eines Kochmediums; wobei das Reservoir (112) die Aufnahme eines Frittierkorbs (130) ermöglicht;
ein oder mehrere Heizelemente (162, 202, 1011, 1012) zum Erhitzen des Kochmediums;
ein Prozessormodul (134), das angeordnet ist, um eine ausgewählte Kochtemperatur aufzunehmen und mit einem oder mehreren Heizelementen (162, 202, 1011, 1012) gekoppelt ist zum Steuern der Aktivierung und Deaktivierung des Heizelements; wobei
das Prozessormodul (134) angepasst ist, um einen geschätzten Temperaturabfall zu berechnen, der beim Absenken des Frittierkorbs (130) in das Reservoir (112) erwartet wird, und um zu bewirken, dass das Kochmedium auf eine Temperatur erwärmt wird, die um den geschätzten Temperaturabfall über der Kochtemperatur liegt, wodurch der geschätzte Temperaturabfall berücksichtigt wird;
**dadurch gekennzeichnet, dass**
die Vorrichtung ferner eine Wägezelle (120) umfasst, die ein Gewichterfassungselement (122) aufweist, das angeordnet ist, so dass die Wägezelle (120) auf das Empfangen des Frittierkorbs (130) hin ein Gewichtsignal erzeugt, welches das Gewicht des Frittierkorbs anzeigt, und das Prozessormodul (134) angeordnet ist, um das Gewichtsignal zu empfangen und den geschätzten Temperaturabfall basierend auf dem empfangenen Gewichtsignal zu berechnen.

2. Die Vorrichtung gemäß Anspruch 1, bei der
die Wägezelle (120) bewegbar ist zum Absenken des Frittierkorbs (130) in das Reservoir (112) und zum Anheben des Frittierkorbs (130) von dem Reservoir (112).

3. Die Vorrichtung gemäß Anspruch 2, bei der der Frittierkorb (130) lösbar mit der Wägezelle (120) gekoppelt ist.

4. Die Vorrichtung gemäß Anspruch 2 oder Anspruch 3, bei der das Prozessormodul (134) mit dem Gewichterfassungselement (122) gekoppelt ist zum Empfangen des Gewichtsignals.

5. Die Vorrichtung gemäß einem der Ansprüche 2 bis 4, bei der die Wägezelle (120) ein Wägesignal erzeugt, das anzeigt, dass der Frittierkorb (130) aufgenommen wurde; wobei das Prozessormodul (134) mit der Wägezelle (120) gekoppelt ist zum Empfangen des Wägesignals.

6. Die Vorrichtung gemäß einem der Ansprüche 2 bis 5, bei der das Prozessormodul (134) mit der Wägezelle (120) gekoppelt ist zum automatischen Absenken und Anheben des Frittierkorbs (130).

7. Die Vorrichtung gemäß Anspruch 6, bei der das Prozessormodul (134) vor dem automatischen Absenken des Frittierkorbs (130) das eine oder die mehreren Heizelemente (162, 202, 1011, 1012) voraktiviert basierend auf dem geschätzten Temperaturabfall.

8. Die Vorrichtung gemäß einem der vorhergehenden Ansprüche, wobei die Vorrichtung ferner folgende Merkmale umfasst:
ein Lageerfassungsmodul (132, 150, 155) zum Bestimmen der Position des Korbs (130) in dem Reservoir (112); wobei das Prozessormodul (134) mit dem Lageerfassungsmodul (132, 150, 155) gekoppelt ist zum Empfangen eines Lagesignals, das die Korbposition in dem Reservoir (112) anzeigt.

9. Die Vorrichtung gemäß Anspruch 8, bei der das Lagesignal anzeigt, dass der Korb (130) in einer angehobenen Konfiguration oder einer abgesenkten Konfiguration ist.

10. Die Vorrichtung gemäß Anspruch 8 oder 9, bei der das Lageerfassungsmodul einen Sensor (132, 150, 155) umfasst, der aufgrund dessen, dass der Korb zumindest entweder in der angehobenen Konfiguration oder der abgesenkten Konfiguration ist, in Eingriff genommen ist.

11. Die Vorrichtung gemäß Anspruch 9, bei der das Prozessormodul (134) angepasst ist, zum:
automatischen Aktivieren der Heizelemente (162, 202, 1011, 1012) daraufhin, dass das Lagesignal den Zustand von einer angehobenen Konfiguration ändert;
fortlaufenden Überwachen der Temperatur des Kochmediums; und
falls die Temperatur des Kochmediums über die Kontrolltemperatur steigt, Deaktivieren der Heizelemente (162, 202, 1011, 1012).

12. Die Vorrichtung gemäß einem der vorhergehenden Ansprüche, wobei die Vorrichtung ferner einen oder mehrere Lüfter (116) umfasst zum Richten eines Luftflusses durch einen Luftspalt (114) um das Reservoir (112) herum.

13. Die Vorrichtung gemäß einem der vorhergehenden Ansprüche, wobei die Vorrichtung ferner einen Temperatursensor (164) umfasst zum Erzeugen eines Temperatursignals, das die Kochmediumtemperatur anzeigt; wobei das Prozessormodul (134) mit dem Temperatursensor (164) gekoppelt ist zum Empfangen des Temperatursignals; wobei das Prozessormodul (134) angepasst ist, um die Kochmediumtemperatur zu überwachen, zum Erfassen des Beginns eines Kochvorgangs durch Identifizieren eines Abfalls der Kochmediumtemperatur.

14. Ein Verfahren zum Frittieren unter Verwendung eines Geräts gemäß einem der vorhergehenden Ansprüche, wobei das Verfahren implementiert ist, der Auswahl einer vorbestimmten Eingabekonfiguration eines Nutzers zu folgen, beispielsweise einer die gekennzeichnet als "ZWEIFACH FRITTIERTE POMMES FRITES" und die Verwendung folgender Schritte umfasst:
(a) Konfigurieren (830) einer ersten eingestellten Kochzeit und einer ersten eingestellten Kochtemperatur für eine erste Kochdauer;
(b) Einrichten (840) einer Startkochmediumtemperatur für eine erste Kochdauer, wobei die Startkochmediumtemperatur um einen ersten geschätzten Temperaturabfall über der ersten eingestellten Kochtemperatur liegt;
(c) Absenken (850) des Frittierkorbs in das Kochmedium;
(d) Beibehalten (870) des Kochmediums im Wesentlichen bei der ersten eingestellten Kochtemperatur für die erste Kochdauer;
(e) Entfernen des Frittierkorbs;
(f) Konfigurieren (830) einer zweiten eingestellten Kochzeit und einer zweiten eingestellten Kochtemperatur für eine zweite Kochdauer;
(g) Einrichten (840) einer Startkochmediumtemperatur für die zweite Kochdauer, wobei die Startkochmediumtemperatur um einen zweiten geschätzten Temperaturabfall über der zweiten eingestellten Kochtemperatur liegt;
(h) Absenken (850) des Frittierkorbs in das Kochmedium;
(i) Beibehalten (870) des Kochmediums im Wesentlichen bei der zweiten eingestellten Kochtemperatur für die zweite Kochdauer; und
(j) Entfernen des Frittierkorbs.

## Revendications

1. Appareil pour une friteuse, l'appareil comportant:
un corps extérieur (110);
un réservoir (112) situé à l'intérieur du corps (110) destiné à contenir un volume de milieu de cuisson; le réservoir (112) permettant la réception d'un panier à frire (130);
un ou plusieurs éléments chauffants (162, 202, 1011, 1012) destinés à chauffer le milieu de cuisson;
un module processeur (134) aménagé de manière à recevoir une température de cuisson sélectionnée et couplé aux un ou plusieurs éléments chauffants (162, 202, 1011, 1012) pour commander l'activation et la désactivation de l'élément chauffant;
dans lequel
le module processeur (134) est adapté pour calculer une chute de température estimée lors de la descente du panier à frire (130) dans le réservoir (112) et pour provoquer l'échauffement du milieu de cuisson à une température qui est la chute de température estimée au-dessus de la température de cuisson, tenant compte ainsi de la chute de température estimée;
**caractérisé par le fait que**
l'appareil comporte par ailleurs une cellule de charge (120) qui présente un élément de détection de poids (122) aménagé de sorte que la cellule de charge (120), lors de la réception du panier à frire (130), génère un signal de poids indiquant le poids du panier à frire et le module processeur (134) est aménagé pour recevoir le signal de poids et pour calculer la chute de température estimée sur base du signal de poids reçu.

2. Appareil selon la revendication 1, dans lequel
la cellule de charge (120) est mobile pour descendre le panier à frire (130) dans le réservoir (112) et pour élever le panier à frire (130) hors du réservoir (112).

3. Appareil selon la revendication 2, dans lequel le panier à frire (130) est couplé de manière amovible à la cellule de charge (120).

4. Appareil selon la revendication 2 ou la revendication 3, dans lequel le module processeur (134) est couplé à l'élément de détection de poids (122) pour recevoir le signal de poids.

5. Appareil selon l'une quelconque des revendications 2 à 4, dans lequel la cellule de charge (120) génère un signal de charge indiquant que le panier à frire (130) est reçu; le module processeur (134) étant couplé à la cellule de charge (120) pour recevoir le signal de charge.

6. Appareil selon l'une quelconque des revendications 2 à 5, dans lequel le module processeur (134) est couplé à la cellule de charge (120) pour descendre et élever automatiquement le panier à frire (130).

7. Appareil selon la revendication 6, dans lequel le module processeur (134) pré-active les un ou plusieurs éléments chauffants (162, 202, 1011, 1012) sur base de la chute de température estimée avant de descendre automatiquement le panier à frire (130).

8. Appareil selon l'une quelconque des revendications précédentes, dans lequel l'appareil comporte par ailleurs: un module de détection de localisation (132, 150, 155) destiné à détecter la position du panier (130) à l'intérieur du réservoir (112); le module processeur (134) étant couplé au module de détection de localisation (132, 150, 155) pour recevoir un signal de localisation indiquant la position du panier dans le réservoir (112).

9. Appareil selon la revendication 8, dans lequel le signal de localisation indique que le panier (130) se trouve dans une configuration élevée ou dans une configuration descendue.

10. Appareil selon la revendication 8 ou la revendication 9, dans lequel le module de détection de localisation comporte un capteur (132, 150, 155) qui est en prise du fait que le panier se trouve dans au moins l'une parmi la configuration élevée ou la configuration descendue.

11. Appareil selon la revendication 9, dans lequel le module processeur (134) est adapté:
pour activer automatiquement les éléments chauffants (162, 202, 1011, 1012) lorsque le signal de localisation change l'état à partir d'une configuration élevée;
pour continuer à surveiller la température du milieu de cuisson; et
si la température du milieu de cuisson s'élève au-dessus de la température de régulation, pour désactiver les éléments chauffants (162, 202, 1011, 1012).

12. Appareil selon l'une quelconque des revendications précédentes, l'appareil comportant par ailleurs un ou plusieurs ventilateurs (116) destinés à diriger le flux d'air à travers un entrefer (114) autour du réservoir (112).

13. Appareil selon l'une quelconque des revendications précédentes, l'appareil comportant par ailleurs un capteur de température (164) destiné à générer un signal de température indiquant la température du milieu de cuisson; le module processeur (134) étant couplé au capteur de température (164) pour recevoir le signal de température; le module processeur (134) étant adapté pour surveiller la température du milieu de cuisson pour détecter le début d'une opération de cuisson en identifiant une chute de la température du milieu de cuisson.

14. Procédé de friture à l'aide d'un dispositif selon l'une quelconque des revendications précédentes, le procédé étant mis en oeuvre suite à la sélection par un utilisateur d'une configuration d'entrée prédéterminée, par exemple une configuration étiquetée "FRITES CUITES DEUX FOIS" et comportant le fait d'utiliser les étapes consistant à:
(a) configurer (830) un premier temps de cuisson de consigne et une première température de cuisson de consigne pour la première période de cuisson;
(b) établir (840) une température de milieu de cuisson de départ pour une première période de cuisson, la température du milieu de cuisson de départ étant une première chute de température estimée au-dessus de la première température de cuisson de consigne;
(c) descendre (850) le panier à frire dans le milieu de cuisson;
(d) maintenir (870) le milieu de cuisson sensiblement à la première température de cuisson de consigne pendant la première période de cuisson;
(e) retirer le panier à frire;
(f) configurer (830) un deuxième temps de cuisson de consigne et une deuxième température de cuisson de consigne pour une deuxième période de cuisson;
(g) établir (840) une température du milieu de cuisson de départ pour la deuxième période de cuisson, la température du milieu de cuisson de départ étant une deuxième chute de température estimée au-dessus de la deuxième température de cuisson de consigne;
(h) descendre (850) le panier à frire dans le milieu de cuisson;
(i) maintenir (870) le milieu de cuisson sensiblement à la deuxième température de cuisson de consigne pendant la deuxième période de cuisson; et
(j) retirer le panier à frire.
